# FASCICULE DE BREVET EUROPEEN

(11) **EP 2 539 372 B1**
(45) Date de publication et mention de la délivrance du brevet: **18.12.2013**
(21) Numéro de dépôt: 11714393.3
(22) Date de dépôt: 17.02.2011
(51) Int. Cl.: C08F 2/22, C08L 33/02, C08L 33/06, C08L 33/14, C09D 7/12, C09D 121/02, C08F 2/38, C08F 290/06, C09D 7/00, C08L 55/00, C08F 220/06, C08F 220/12, C08F 220/28

(54) **EMULSION ACRYLIQUE ASSOCIATIVE CONTENANT UN MONOMERE A BASE D'ALCOOL OXO, SON PROCEDE DE FABRICATION ET PROCEDE D'EPAISSISSEMENT D'UNE FORMULATION AQUEUSE A PARTIR DE CETTE EMULSION**
ASSOZIATIVE ACRYLEMULSION MIT EINEM MONOMER AUF DER ABSIS VON OXOALKOHOL, HERSTELLUNGSVERFAHREN DAFÜR UND VERFAHREN ZUR VERDICKUNG EINER WÄSSRIGEN FORMULIERUNG AUS DIESER EMULSION
ASSOCIATIVE ACRYLIC EMULSION CONTAINING A MONOMER BASED ON OXO ALCOHOL, PRODUCTION METHOD THEREOF, AND METHOD FOR THICKENING AN AQUEOUS FORMULATION PRODUCED FROM SAID EMULSION

(30) Priorité: 08.03.2010 US 311445 P; 26.02.2010 FR 1051368
(43) Date de publication de la demande: 02.01.2013
(73) Titulaire: Coatex S.A.S, 69730 Genay (FR)
(72) Inventeur: SUAU, Jean-Marc, F-69480 Lucenay (FR); RUHLMANN, Denis, F-69730 Genay (FR)
(74) Mandataire: Fiorucci, Hélène
(86) Numéro de dépôt international: PCT/IB2011/000328
(87) Numéro de publication internationale: WO 2011/104600

(56) Documents cités:
- WO-A1-2006/016035

## Description

La présente invention concerne des modificateurs de rhéologie de type HASE particuliers : il s'agit d'émulsions aqueuses dont l'extrait sec peut atteindre 25 % environ, à base d'épaississants acryliques disposant d'un monomère associatif fonctionnalisé par un groupe hydrophobe à base d'alcools oxo.

Une de leurs particularité réside en ce qu'elles sont parfaitement stables et manipulables avec un tel extrait sec, tout en étant neutralisées c'est à dire prêtes à l'emploi : une fois introduites dans une phase aqueuse contenant un latex et possédant un caractère alcalin, elles induisent une augmentation de la viscosité, sur une large gamme de gradients de cisaillement et ce, sans ajout d'agent de neutralisation. Ceci constitue un atout majeur par rapport aux HASE de l'art antérieur qui épaississaient un milieu après ajout d'un agent de neutralisation dans celui-ci ; un tel ajout n'était pas possible dans l'émulsion en l'état, sous risque de faire augmenter sa viscosité à un niveau qui la rendait non manipulable et notamment non pompable.

Avec les émulsions objets de la présente invention, l'homme du métier dispose aujourd'hui de produits qui ne nécessitent plus l'ajout ultérieur d'un agent neutralisant dans le milieu à épaissir, dont la viscosité en l'état les rend parfaitement manipulables par l'utilisateur pour un extrait sec commercialement très intéressant, et au pouvoir épaississant marqué sur une large gamme de gradients de cisaillement.

Un tel résultat est atteint grâce à la combinaison particulière entre un agent de transfert de chaîne utilisé pour la fabrication de ces polymères associatifs, et des alcools oxo mis en oeuvre pour fonctionnaliser le monomère hydrophobe desdits polymères. En outre, il s'avère que ces alcools oxo sont très facilement synthétisables, et présentent une biodégradabilité importante, ce qui constitue un autre intérêt de la présente invention.

Un premier objet de l'invention consiste donc en des émulsions de type HASE, contenant des polymères acryliques associatifs neutralisés totalement ou partiellement, et dont le monomère associatif a été fonctionnalisé par un alcool oxo. Un deuxième objet de l'invention repose sur un procédé de fabrication de telles émulsions, notamment par mise en oeuvre d'un agent de transfert de chaîne au cours de la synthèse du polymère associatif. Un troisième objet de l'invention consiste en un procédé pour épaissir une formulation aqueuse -dont une peinture latex à base aqueuse- à partir de telles émulsions.

Maîtriser la rhéologie d'une peinture, tant au stade de sa fabrication, que pendant son transport, son stockage ou sa mise en oeuvre reste aujourd'hui une priorité. La diversité des contraintes observées au niveau de chacune de ces étapes renvoie à une multiplicité de comportements rhéologiques différents. On peut néanmoins résumer le besoin de l'homme du métier à l'obtention d'un effet d'épaississement de ladite peinture, tant pour des raisons de stabilité au cours du temps, que pour une possible application sur une surface verticale, l'absence d'éclaboussure au moment de la mise en oeuvre, ou de coulure par la suite, etc... De fait, on a désigné les produits qui contribuent à cette régulation du comportement rhéologique sous le terme d'épaississants.

Historiquement, on a utilisé dès les années 1950 des gommes et des produits à base cellulosique, dont une des caractéristiques essentielles est leur poids moléculaire élevé. Ces composés présentent cependant un certain nombre d'inconvénients tels que leur instabilité au cours du temps (voir le document US 4 673 518), la nécessité d'en utiliser une quantité importante (voir le document EP 0 250 943 A1), ou leur coût de production, notamment au niveau du traitement des déchets (voir le document US 4 384 096).

Ont ensuite vu le jour les épaississants dits « associatifs » : ce sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu. Leur mécanisme de fonctionnement et leurs caractéristiques sont désormais bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp 423-442).

Parmi ces épaississants associatifs, on distingue la catégorie des HEUR (Uréthane oxyde d'Ethylène modifiés Hydrophobiquement ou Hydrophobically modified Ethylene oxyde URethane selon l'acronyme anglo-saxon approprié) et des HASE (Emulsions modifiées hydrophobiquement et épaississantes en milieu alcalin ou Hydrophobically modified Alkali-soluble Emulsions). Les premiers désignent des polymères résultant de la synthèse entre un composé du type polyalkylène glycol, un polyisocyanate, et un monomère associatif alkyle et/ou aryle constitué d'un groupe terminal hydrophobe. Les seconds désignent des polymères de l'acide (méth)acrylique, d'un ester de ces acides et d'un monomère associatif constitué d'une chaîne oxyalkylée terminée par un groupement hydrophobe.

Les HEUR sont à l'origine de nombreuses propriétés dans les peintures aqueuses, notamment fonction de la nature de leur monomère associatif. On pourra citer les demandes de brevet suivantes déposées par la société COATEX : EP 0 639 595 A1 qui propose des groupements hydrophobes ayant de 4 à 36 atomes de carbone pour augmenter la viscosité Brookfield™, WO 02 / 102868 A1 qui décrit l'utilisation de plurystyrylphénols avec plus de 40 atomes pour augmenter la viscosité quel que soit le gradient de cisaillement, et enfin EP 1 425 325 A1 qui révèle un monomère associatif constitué de di- et tristyrylphénol, permettant d'obtenir une excellente compatibilité pigmentaire et une viscosité élevée à bas et moyen gradient de cisaillement.

Cependant, les HEUR sont des espèces chimiques difficilement solubles dans l'eau et doivent être mis en solution en présence de solvants ou de tensio-actifs, dès lors que leur % en matière active excède environ 25 %. Cette problématique est relatée dans le document EP 0 682 094 A1 : la solution proposée repose de manière triviale sur l'emploi de tensio-actifs. De plus, on notera que des épaississants de type HEUR, hautement concentrés et contenant des tensio-actifs, avaient été commercialisés par la société COATEX™ sous les noms COAPUR™ 5035 et COAPUR™ 6050, avant la date de priorité de cette demande, et dès 1993 pour les premiers d'entre eux.

Or, la mise en oeuvre de solvants et de tensio-actifs pour formuler l'épaississant de type HEUR n'est pas sans poser un certain nombre de problèmes. On rappelle d'une part que les solvants sont soumis à des législations de plus en plus draconiennes visant à restreindre et même proscrire leur utilisation dans les peintures. Quant aux tensio-actifs de la formulation épaississante, ils sont de nature à déstabiliser les peintures, par interaction avec les autres tensio-actifs contenus dans ces dernières. Par conséquent, la formulation dans l'eau de HEUR n'est possible qu'à condition de restreindre drastiquement la concentration en polyuréthane (de l'ordre de 20 % en poids), ce qui rend ces épaississants peu efficaces.

Aussi, l'homme du métier s'oriente-t-il vers les épaississants de type HASE. Pour ces derniers, le choix du groupement hydrophobe du monomère associatif est à l'origine de propriétés rhéologiques variées. On peut citer à cet égard les demandes de brevet suivantes déposées par COATEX™ : EP 0 577 526 Al qui décrit une chaîne grasse avec des groupes linéaires ou ramifiés du type alkyle et/ou aryle ayant de 26 à 30 atomes de carbone, pour développer de hautes viscosités sous bas gradient de cisaillement, et EP 1 778 797 A1 qui décrit une chaîne terminale ramifiée comportant de 10 à 24 atomes de carbone, pour améliorer la compatibilité pigmentaire et augmenter la viscosité de manière générale.

Ces émulsions de type HASE sont sous forme acide : il est en effet bien connu qu'elles augmentent la viscosité après neutralisation, à un pH environ supérieur à 6, lorsqu'elles sont placées dans le milieu qu'elles sont sensées épaissir. Concrètement, elles sont introduites dans ce milieu, et on ajoute une base qui neutralise les sites carboxyliques de ces émulsions : ceci déclenche la solubilisation du polymère et donc le phénomène d'épaississement, renforcé par la présence de groupes hydrophobes du monomère associatif.

Il est possible de neutraliser ces émulsions de type HASE au préalable, c'est-à-dire en l'état (ou avant introduction dans le milieu destiné à être épaissi) à un pH voisin de 6 : mais si tel est le cas, la viscosité de ces émulsions augmente à tel point qu'elles ne sont plus pompables ni manipulables. Ceci fait partie des connaissances de base de l'homme du métier, et est explicitement décrit dans le document EP 0 013 836 A1 (page 4 lignes 11-24 et page 8 lignes 5-25).

La seule exception à cette règle concerne des émulsions contenant des polymères de type HASE avec des alkyl phénols, qu'on peut trouver sous forme pré-neutralisée, manipulables et avec un extrait sec de l'ordre de 25 %. Néanmoins, les alkylphénols sont aujourd'hui largement suspectés d'être cancérigènes et dangereux pour la reproduction ; encore tolérés dans l'industrie des peintures, ils n'en demeurent pas moins dans le collimateur des institutions législatives en la matière, notamment européennes. Ces produits ne constituent donc pas une réponse satisfaisante pour l'homme du métier.

Par conséquent, disposer d'une émulsion de type HASE, stable et manipulable avec un extrait sec pouvant être voisin de 25 %, tout en étant neutralisée donc prête à l'emploi, constitue une demande très forte du marché, mais non encore résolue. Poursuivant ses recherches dans cette direction, la Demanderesse est parvenue à mettre au point un procédé de fabrication d'émulsions de type HASE répondant à ces caractéristiques.

De manière surprenante, ces émulsions, neutralisées à un pH voisin de 7, présentent une viscosité compatible avec leur manipulation et leur pompage, même à un extrait sec de l'ordre de 25 %. De plus, elles permettent d'épaissir efficacement une formulation aqueuse contenant un latex sur une large plage de gradients de cisaillement, sans ajout obligatoire d'agent de neutralisation.

Le pH voisin de 7 est atteint par neutralisation totale ou partielle de ladite émulsion. De plus, on indique que, notamment dans le cas où l'émulsion n'est que partiellement neutralisée, on peut éventuellement ajouter par la suite dans le milieu à épaissir un agent de neutralisation, comme dans l'art antérieur. A la différence de cet art antérieur, les émulsions selon l'invention permettent alors de réduire la quantité d'agent neutralisant rajouté, pour un niveau de performance épaississante équivalent.

Ce procédé est caractérisé en ce qu'il met en oeuvre la combinaison d'un agent de transfert de chaîne pendant la réaction de polymérisation, et en ce que le monomère associatif hydrophobe répond à une formule (I) très particulière qui sera explicitée plus avant. La Demanderesse a notamment démontré par de nombreux essais que, si l'une de ces deux conditions n'était pas remplie (autre monomère associatif ou absence d'agent de transfert de chaîne pendant la polymérisation), on ne parvenait pas à résoudre le problème technique objet de la présente invention.

Le monomère associatif hydrophobe répond à la formule (I) :

R - (AO)ₘ - (BO)ₙ - R'

où :
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable, préférentiellement méthacrylate,
- R' étant caractérisé en ce qu'il est constitué d'au moins un groupement de formule (II) :

   CH₃ - (CH₂)ₚ - CH(CH₂)ᵣCH₃ - (CH₂)_{q} -
où p et q désignent des entiers dont un au moins est non nul, avec 5 < p + q < 13, r est un entier compris entre 0 et 5, préférentiellement égal à 0.

Les composés de formule (II) constituent le groupe hydrophobe terminal du monomère associatif de formule (I). Ce dernier est fabriqué classiquement par éthoxylation d'un alcool, puis fonctionnalisation en vue de le rendre polymérisable. Dans le cadre de la présente invention, la Demanderesse a su remarquer que le choix particulier d'un alcool oxo permettait la synthèse de nouveaux monomères associatifs de formule (I), qui confèrent au final l'ensemble des propriétés énumérées précédemment.

La formule (III) de ces alcools oxo est la suivante :

CH₃ - (CH₂)ₚ - CH(CH₂)ᵣCH₃ - (CH₂)_{q} - OH

où p, q et r ont les significations déjà indiquées. Il s'agit de composés bien connus, obtenus de manière très simple par hydroformylation d'un alcène au moyen d'un gaz de synthèse présentant un rapport H₂/CO proche de 1. Cette réaction permet de transformer l'alcène en aldéhyde, lequel n'a plus qu'à être hydrogéné pour que l'alcool puisse être obtenu. On en trouve une illustration dans le document WO 2007 / 066036.

Des exemples de ces alcools sont les produits commercialisés par la société SASOL™ sous les marque Lial™, Isalchem™, Alchem™ et Safol™, ou par la société BASF™ sous la marque Lutensol™.

Le fait d'indiquer que le groupement terminal R' du monomère de formule (I) est constitué d'au moins un groupement de formule (II) -et non pas qu'il est exclusivement constitué de ce groupement- relève du fait que l'alcool oxo de départ résulte de la réaction d'hydroformylation mentionnée ci-dessus, qui peut conduire aussi à la formation d'alcools linéaires. De plus, dans cette formule, la valeur indiquée pour p + q est celle relative à l'espèce majoritaire, les alcools oxo commerciaux étant en général des mélanges ou des coupes.

A ce jour, il n'existe pas d'émulsions de type HASE, disposant d'un tel monomère associatif. Rien ne laissait penser que de telles émulsions seraient à la fois pompables et manipulables à un extrait sec voisin de 25 %, tout en étant neutralisées à un pH voisin de 7, c'est-à-dire prêtes à l'emploi. Il est en effet très étonnant (car contraire aux connaissances générales de l'homme du métier, comme relatées dans le document EP 0 013 836 A1 déjà discuté) que de telles émulsions présentent une faible viscosité en l'état, tout en ayant un fort pouvoir épaississant en présence d'un latex en milieu aqueux.

De plus, on démontre que ces émulsions, sans ajout d'agent de neutralisation, permettent d'épaissir une formulation aqueuse contenant un latex sur un large intervalle de valeurs de taux de cisaillement. De manière tout à fait avantageuse, certaines de ces émulsions pour lesquelles on a ajusté le taux d'agent de transfert mis en oeuvre pour la synthèse du polymère qu'elles contiennent, présentent un excellent compromis entre leur viscosité en l'état et leur pouvoir épaississant en présence d'un latex en milieu aqueux.

Aussi, un premier objet de l'invention consiste en une émulsion de type HASE, contenant de l'eau et au moins un polymère constitué :
a) d'acide (méth)acrylique,
b) d'au moins un ester de l'acide (méth)acrylique,
c) d'au moins un monomère de formule (I) :

   R - (AO)ₘ - (BO)ₙ - R'
où :
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable, préférentiellement méthacrylate,
- R' étant caractérisé en ce qu'il est constitué d'au moins un groupement de formule (II) :

   CH₃ - (CH₂)ₚ - CH(CH₂)ᵣCH₃ - (CH₂)_{q} -
où p et q désignent des entiers dont un au moins est non nul, avec 5 < p + q < 13, r est un entier compris entre 0 et 5, préférentiellement égal à 0.

Ces émulsions sont aussi caractérisées en ce que, pour le monomère de formule (I), on a n = 0, AO désigne l'oxyde d'éthylène, et m est compris entre 20 et 40.

Ces émulsions sont aussi caractérisées en ce qu'elles sont partiellement ou totalement, préférentiellement totalement neutralisées à un pH compris entre 6 et 10, préférentiellement entre 6,5 et 8,5, et en ce qu'elles présentent de manière concomitante un extrait sec compris entre 15 % et 20 % et une viscosité Brookfield™ mesurée à 25°C et à 10 tours par minute inférieure à 50 000 mPa.s.

Ces émulsions sont aussi caractérisées en ce que ledit polymère qu'elle contienne est constitué, exprimé en % en poids de chacun de ses monomères :
a) de 20 % à 50 %, préférentiellement de 35 % à 45 % d'acide (méth)acrylique,
b) de 40 % à 70 %, préférentiellement de 45 % à 55 % d'au moins un ester de l'acide (méth)acrylique,
c) de 2 % à 20 %, préférentiellement de 3 % à 15 % d'au moins un monomère ayant la formule (I) précitée.

Un deuxième objet de la présente invention consiste en un procédé de fabrication d'une émulsion de type HASE, par mélange entre de l'eau et au moins un polymère obtenu par mise en contact entre :
a) de l'acide (méth)acrylique,
b) au moins un ester de l'acide (méth)acrylique,
c) au moins un monomère ayant la formule (I) précitée,
en présence d'au moins un agent de transfert de chaîne.

Ce procédé est aussi caractérisé en ce que, pour le monomère de formule (I), on a n = 0, AO désigne l'oxyde d'éthylène, et m est compris entre 20 et 40.

Ce procédé est aussi caractérisé en ce que la dose massique d'agent de transfert de chaîne est comprise, par rapport à la masse totale de monomères engagés, entre 500 ppm et 10 000 ppm, préférentiellement entre 1 500 ppm et 6 000 ppm, très préférentiellement entre 2 000 ppm et 5 000 par rapport à la masse totale des monomères engagés.

Ce procédé est aussi caractérisé en ce que l'agent de transfert de chaîne est choisi parmi le N-dodécyl mercaptan, le N-décyl mercaptan, l'octyl mercaptan, le 1,8-dimercapto-3,6-dioxaoctane (DMDO, n° CAS : 14970-87-7), l'acide thiolactique.

Ce procédé est aussi caractérisé en ce qu'il comprend une étape ultérieure de neutralisation totale ou partielle, préférentiellement totale de l'émulsion à un pH compris entre 6 et 10, préférentiellement entre 6,5 et 8,5.

Ce procédé est aussi caractérisé en ce que les émulsions présentent un extrait sec compris entre 15 % et 20 % et une viscosité Brookfield mesurée à 25°C et à 10 tours par minute inférieure à 50 000 mPa.s.

Ce procédé est aussi caractérisé en ce que ledit polymère contenu dans les émulsions est constitué, exprimé en % en poids de chacun de ses monomères :
a) de 20 % à 50 %, préférentiellement de 35 % à 45 % d'acide (méth)acrylique,
b) de 40 % à 70 %, préférentiellement de 45 % à 55 % d'au moins un ester de l'acide (méth)acrylique,
c) de 2 % à 20 %, préférentiellement de 3 % à 15 % d'au moins un monomère ayant la formule (I) précitée.

Un troisième objet de la présente invention consiste en un procédé d'épaississement d'une formulation aqueuse contenant un latex, par introduction dans ladite formulation d'une émulsion de type HASE précitée dont le pH est compris entre 6 et 10, préférentiellement entre 6,5 et 8,5, avec ajout éventuel d'un agent de neutralisation dans ladite formulation.

Ce procédé est aussi caractérisé en ce que ladite formulation est une peinture aqueuse.

### EXEMPLES

Dans chacun des essais, on commence par réaliser une émulsion de polymère, par mélange entre l'eau et ledit polymère. La constitution de chaque polymère est donnée par la suite (voir notamment les données essentielles dans le tableau 1).

Chaque émulsion est totalement neutralisée à un pH de 7, avec une solution d'hydroxyde de sodium. On mesure alors, pour chaque émulsion, et en fonction de son extrait sec en polymère, sa viscosité Brookfield™ à 10 tours par minute (tableau 2) et à 25°C.

Pour certaines de ces émulsions qui s'avèrent manipulables à un extrait sec important (valeur de viscosité Brookfield™ à 10 tours par minute inférieure à 50 000 mPa.s pour un extrait sec de 20 %) on réalise un test d'efficacité épaississante sur un liant (tableau 3). Pour ce faire, on introduit dans une solution aqueuse d'un liant acrylique, une certaine dose de l'émulsion neutralisée. Tous les tests sont réalisés de manière à ce qu'on ait 50 grammes d'une émulsion totalement préneutralisée à pH = 7, et d'extrait sec égal à 20 % en poids sec de polymère et 175 grammes d'un liant acrylique Neocryl™ XK 90 commercialisé par la société DSM™.

### Essai n° 1

Cet essai illustre l'art antérieur, ne met pas en oeuvre d'agent de transfert de chaîne, et concerne une émulsion aqueuse d'un polymère constitué de, en % en poids de chacun de ses monomères :
a) 35,5 % d'acide méthacrylique,
b) 52,5 % d'acrylate d'éthyle,
c) 12,0 % d'un monomère de formule (I) dans laquelle m = 30, n = 0, AO désigne l'oxyde d'éthylène, R désigne la fonction méthacrylate, R' désigne le groupement de formule (II) avec p + q = 9 (désigné sous le terme oxo C₁₂OE₃₀).

Ce polymère a été obtenu par mise en contact dans un milieu réactionnel qui est l'eau, de l'ensemble des monomères précités. Sa synthèse correspond à celle décrite dans les essais n° 2 à 7, mais sans mise en oeuvre d'agent de transfert de chaîne.

### Essai n° 2 à 7

Ces essais illustrent l'invention, et mettent en oeuvre une dose croissante d'un agent de transfert de chaîne qui est le dodecyl mercaptan, et concernent des émulsions aqueuses d'un polymère constitué de, en % en poids de chacun de ses monomères :
a) 35,5 % d'acide méthacrylique,
b) 52,5 % d'acrylate d'éthyle,
c) 12,0 % d'un monomère de formule (I) dans laquelle m = 30, n = 0, AO désigne l'oxyde d'éthylène, R désigne la fonction méthacrylate, R' désigne le groupement de formule (II) avec p + q = 9 (désigné sous le terme oxo C₁₂OE₃₀).

Ce polymère a été obtenu par mise en contact dans un milieu réactionnel qui est l'eau, de l'ensemble des monomères précités et ce, en présence d'une certaine quantité d'agent de transfert de chaîne qui est le dodecyl mercaptan.

Concrètement, pour la synthèse du polymère en présence de 560 ppm de mercaptan (essai n° 2), on commence par peser dans un réacteur de 1 litre 409 grammes d'eau bi permutée et 5,6 grammes de dodecyl sulfate de sodium. On chauffe en pied de cuve à 82°C ± 2°C.

Pendant ce temps, on prépare une pré émulsion, en pesant dans un bécher :
- 116,8 grammes d'eau bi permutée,
- 1,96 gramme de dodecyl sulfate de sodium,
- 0,139 gramme de dodecyl mercaptan, soit 556 ppm de mercaptan par rapport à la masse de tous les monomères engagés,
- 88,84 grammes d'acide méthacrylique,
- 131,1 grammes d'acrylate d'éthyle,
- 30,0 grammes de macromonomère.

On pèse ensuite 0,8 gramme de persulfate d'ammonium dilué dans 6 grammes d'eau bi permutée pour le premier catalyseur, et 0,08 gramme de métabisulfite de sodium dilués dans 4 grammes d'eau bi permutée pour le second catalyseur. Lorsque le pied de cuve est à température, on ajoute les 2 catalyseurs et on effectue la polymérisation pendant 2 heures à 84°C ± 2°C, avec ajout en parallèle de la pré émulsion. On rince la pompe avec 20 grammes d'eau bi permutée et on cuit 1 heure à 84°C ± 2°C. On refroidit enfin à température ambiante et on filtre.

Les synthèses correspondant aux essais n° 3 à 7 sont réalisées de manière similaire, en ajustant la dose de mercaptan.

### Observations

On constate que seuls les essais mettant à la fois en oeuvre le monomère particulier à base d'alcools oxo et l'agent de transfert de chaîne, conduisent à des valeurs de viscosité Brookfield™ faibles, même à un extrait sec de 25 % (tableau 2).

De plus, chacune de ces émulsions totalement préneutralisée, permet d'épaissir efficacement la solution de liant acrylique (tableau 3). Les meilleurs résultats sont notamment obtenus selon les émulsions des essais n° 5 et 6 qui, tout en ayant un viscosité Brookfield™ à 10 tours par minute inférieure à 20 000 mPa.s pour un extrait sec cependant égal à 25 %, conduisent néanmoins à un épaississement important, quel que soit le gradient de cisaillement.

On dispose donc d'émulsions préneutralisées de type HASE, stables et manipulables pour un extrait sec ayant un intérêt commercial, dénuées de nonyl phénols, et pouvant épaissir avantageusement un latex en solution aqueuse.

### Essai n° 8

Cet essai illustre l'invention. Il met notamment en oeuvre un monomère associatif différent de celui utilisé précédemment (lien méthacryl-uréthanne).

Il met en oeuvre une certaine quantité d'un agent de transfert de chaîne qui est le dodecyl mercaptan, et concerne une émulsion aqueuse d'un polymère constitué de, en % en poids de chacun de ses monomères :
a) 35,5 % d'acide méthacrylique,
b) 52,5 % d'acrylate d'éthyle,
c) 12,0 % d'un monomère de formule (I) dans laquelle m = 30, n = 0, AO désigne l'oxyde d'éthylène, R désigne la fonction méthacryl-uréthanne, R' désigne le groupement de formule (II) avec p + q = 9 (désigné sous le terme oxo C₁₂OE₃₀).

Ce polymère a été obtenu par mise en contact dans un milieu réactionnel qui est l'eau, de l'ensemble des monomères précités, selon la même procédure que décrite précédemment.

### Essais n° 9 et 10

Cet essai illustre l'invention. Il met notamment en oeuvre un monomère associatif différent de celui utilisé dans les essais précédents (similaire à celui utilisé dans les essais n° 2 à 7, mais oxyéthylé 25 fois, le % du monomère associatif étant ici de 10 et 15%).

Ils mettent en oeuvre une certaine quantité d'un agent de transfert de chaîne qui est le dodecyl mercaptan, et concerne une émulsion aqueuse d'un polymère constitué de, en % en poids de chacun de ses monomères :
a) 33,5 % et 37,5 % d'acide méthacrylique (essais 9 et 10),
b) 52,5 % d'acrylate d'éthyle,
c) 10,0 % et 15,0 % d'un monomère de formule (I) dans laquelle (essais n° 9 et 10) m = 25, n = 0, AO désigne l'oxyde d'éthylène, R désigne la fonction méthacrylate, R' désigne le groupement de formule (II) avec p + q = 9 (désigné sous le terme oxo C₁₂OE₂₅).

Ce polymère a été obtenu par mise en contact dans un milieu réactionnel qui est l'eau, de l'ensemble des monomères précités, selon la même procédure que décrite précédemment.

### Observations

Les résultats selon les essais 8 à 10 corroborent ceux obtenus selon les tests n° 2 à 7. On observe des valeurs de viscosité Brookfield™ faibles.

On dispose donc d'émulsions préneutralisées de type HASE, stables et manipulables pour un extrait sec ayant un intérêt commercial, dénuées de nonyl phénols, et pouvant épaissir avantageusement un latex en solution aqueuse.

### Essais n° 11 à 15

Ces essais illustrent des domaines hors invention. Ils mettent notamment en oeuvre un monomère associatif différent de celui utilisé dans les essais précédents, et exempt de nonylphénols. Ils mettent (essais 13 à 15) ou non (essais 11 et 12) en oeuvre 2 110 ppm d'un agent de transfert de chaîne qui est le dodecyl mercaptan.

Ils concernent une émulsion aqueuse d'un polymère constitué de, en % en poids de chacun de ses monomères :
a) 35,5 % d'acide méthacrylique,
b) 52,5 % d'acrylate d'éthyle,
c) 12,5 % d'un monomère qui est :
   un monomère de formule (I) dans laquelle m = 36, n = 0, AO désigne l'oxyde d'éthylène, R désigne la fonction méthacrylate, R' désigne le 2-hexyl 1-dodécanyle pour l'essai n° 11 (désigné sous le terme iso C₂₀OE₃₆) ;
   un monomère de formule (I) dans laquelle m = 25, n = 0, AO désigne l'oxyde d'éthylène, R désigne la fonction méthacrylate, R' désigne un groupe alkyle linéaire ayant 12 atomes de carbone pour l'essai n° 12 (désigné sous le terme C₁₂OE₂₅) ;
   le même monomère que celui selon l'essai n° 11 pour l'essai n° 13 ;
   un monomère de formule (I) dans laquelle m = 23, n = 0, AO désigne l'oxyde d'éthylène, R désigne la fonction méthacrylate, R' désigne un groupe alkyle linéaire ayant 12 atomes de carbone pour l'essai n° 14 ;
   le même monomère que celui selon l'essai n° 14 pour l'essai n° 15 ; cet essai particulier met en oeuvre 5 600 ppm de mercaptan.

Ces polymères ont été obtenus par mise en contact dans un milieu réactionnel qui est l'eau, de l'ensemble des monomères précités, selon la même procédure que décrite précédemment.

### Observations

On constate selon les essais n° 11 à 15 que le choix d'un monomère hors invention, ou le choix de ne pas utiliser d'agent de transfert de chaîne, conduit à des viscosités Brookfield™ à 10 tours par minute qui s'élèvent très rapidement, en fonction de l'extrait sec. Aucune de ces émulsions ne se prête donc à une pré neutralisation, sous peine d'être trop visqueuse.

Par comparaison entre les essais n° 7 et 15 qui mettent en oeuvre la plus grande quantité d'agent de transfert de chaîne (5 600 ppm), on constate les biens meilleurs résultats obtenus avec l'émulsion selon l'invention en terme de rhéologie en l'état.

Les essais n° 11 à 15 ne conduisant pas à des émulsions préneutralisées et manipulables en l'état à un extrait sec de 20 %, elles n'ont pas pu être testées sur le liant acrylique.

### Essai n° 16

Cet essai illustre un domaine hors invention et met en oeuvre une émulsion d'un polymère HASE commercialisée par la société COATEX™ sous le nom Rheotech™ 2100, qui contient des nonylphénols.

### Observations

On observe des valeurs de viscosité Brookfield™ à 10 tours par minute très faibles, même à 25 % d'extrait sec, ainsi qu'un pouvoir épaississant marqué sur le liant latex, quel que soit le gradient de cisaillement.

Néanmoins, cette émulsion contient des nonylphénols.

### Essais n° 17 et 18

Ces essais illustrent un domaine hors invention et mettent en oeuvre une émulsion d'un polymère HASE commercialisée sous les noms Acrysol™ TT 615 et Acrysol™ TT 935 par la société ROHM & HAAS™, qui ne contiennent pas le monomère particulier de la présente invention.

### Observations

Aucune de ces émulsions ne donne satisfaction en terme de viscosité en l'état, les valeurs de la viscosité Brookfield™ à 10 tours par minute étant extrêmement élevées, même à un extrait sec de 10 %. Elles n'ont pas été testées sur le liant acrylique.

**Tableau 1**

| **Essai n°** | **IN/HI** | **Monomère associatif** | **Dose agent de transfert (ppm / masse totale des monomères)** |
|---|---|---|---|
| **1** | **HI** | oxo C₁₂OE₃₀ | 0 |
| **2** | **IN** | oxo C₁₂OE₃₀ | 560 |
| **3** | **IN** | oxo C₁₂OE₃₀ | 1390 |
| **4** | **IN** | oxo C₁₂OE₃₀ | 1800 |
| **5** | **IN** | oxo Cl₂OE₃₀ | 2840 |
| **6** | **IN** | oxo C₁₂OE₃₀ | 4150 |
| **7** | **IN** | oxo C₁₂OE₃₀ | 5600 |
| **8** | **IN** | maeg TDI oxo C₁₂OE₃₀ | 1390 |
| **9** | **IN** | oxo C₁₂OE₂₅ (10 % monomère) | 2840 |
| **10** | **IN** | oxo C₁₂OE₂₅ (15 % monomère) | 2840 |
| **11** | **HI** | iso C₂₀OE₃₆ | 0 |
| **12** | **HI** | C₂₂OE₂₅ | 0 |
| **13** | **HI** | iso C₁₆OE₂₅ | 2110 |
| **14** | **HI** | C₁₂OE₂₃ | 2110 |
| **15** | **HI** | C₁₂OE₂₃ | 5600 |

| | | | |
|---|---|---|---|
| IN = invention HI = hors invention | | | |

**Tableau 2**

| **Essai n°** | **IN/HI** | **Bk10 10%** | **Bk10 15 %** | **Bk10 20%** | **Bk10 25 %** |
|---|---|---|---|---|---|
| **1** | **HI** | 20500 | > 10⁵ | > 10⁵ | Non mesurable |
| **2** | **IN** | 20500 | 24000 | 46000 | 120000 |
| **3** | **IN** | 18000 | 22000 | 36000 | 80000 |
| **4** | **IN** | 9000 | Non mesuré | 21000 | 42000 |
| **5** | **IN** | 3500 | 8500 | 12400 | 17400 |
| **6** | **IN** | Non mesuré | 5500 | 10500 | 14200 |
| **7** | **IN** | Non mesuré | 3500 | 8300 | 10700 |
| **8** | **IN** | 7000 | 18400 | 32400 | Non mesuré |
| **9** | **IN** | Non mesuré | | 11200 | |
| **10** | **IN** | | | 13800 | |
| **11** | **HI** | > 10⁵ | Non mesurable | | |
| **12** | **HI** | > 10⁵ | | | |
| **13** | **HI** | > 10⁵ | | | |
| **14** | **HI** | 52000 | | | |
| **15** | **HI** | 11000 | 22600 | 52000 | > 10⁵ |
| **16** | **HI** | 500 | Non mesuré | 2600 | 5700 |
| **17** | **HI** | > 10⁵ | Non mesurable | | |
| **18** | **HI** | > 10⁵ | | | |

**Tableau 3**

| **Essai n°** | **IN/HI** | **Bk10** | **Bk100** | **Stormer** | **ICI** |
|---|---|---|---|---|---|
| **2** | **IN** | 5480 | 2540 | 102 | 2,4 |
| **3** | **IN** | 2320 | 1360 | 87 | 2 |
| **4** | **IN** | 1360 | 900 | 77 | 2 |
| **5** | **IN** | 1320 | 840 | 75 | 1,8 |
| **6** | **IN** | 880 | 610 | 68 | 1,5 |
| **7** | **IN** | 760 | 530 | 66 | 1,3 |
| **16** | **HI** | 4120 | 2940 | 113 | 2,3 |

A la lumière de ce dernier tableau, on constate que les émulsions selon l'invention permettent au formulateur d'obtenir une palette de comportements rhéologiques très variés.

Ceci étant, le meilleur compromis entre efficacité épaississante en général, et caractère manipulable de l'émulsion, est obtenu pour les essais n° 4, 5 et 6.

### Essai n° 19 à 21

Ces essais illustrent l'invention, et mettent en oeuvre une dose croissante d'un agent de transfert de chaîne qui est le dodecyl mercaptan (variante préférée du procédé de fabrication selon la présente invention), et concernent des émulsions aqueuses d'un polymère constitué de, en % en poids de chacun de ses monomères :
a) 35,5 % d'acide méthacrylique,
b) 52,5 % d'acrylate d'éthyle,
c) 12,0 % d'un monomère de formule (I) dans laquelle AO désigne l'oxyde d'éthylène et BO l'oxyde de propylène, R désigne la fonction méthacrylate, R' désigne le groupement de formule (II) avec p + q = 9, r = 0 (désigné sous le terme oxo C₁₂OE₃₀), avec
   m = 50, n = 0 pour l'essai n° 19
   m = 40, n = 10 pour l'essai n° 20
   m = 15, n = 0 pour l'essai n° 21

Ces polymères ont été obtenus par mise en contact dans un milieu réactionnel qui est l'eau, de l'ensemble des monomères précités et ce, en présence de 560 ppm de dodecyl mercaptan. Par rapport à l'essai n° 2, on fait donc ici varier le nombre de motifs d'oxyde d'éthylène et de propylène.

### Essai n° 22 à 24

Ces essais illustrent l'invention, et mettent en oeuvre une dose croissante d'un agent de transfert de chaîne qui est le dodecyl mercaptan (variante préférée du procédé de fabrication selon la présente invention), et concernent des émulsions aqueuses d'un polymère constitué de, en % en poids de chacun de ses monomères :
a) 38 %, 36 % et 33 % d'acide méthacrylique, respectivement pour les essais n° 22, 23 et 24
b) 57 %, 56 %, 54 %, % d'acrylate d'éthyle, respectivement pour les essais n° 22, 23 et 24
c) 5 %, 8 %, 15 % respectivement pour les essais n° 22, 23 et 24 d'un monomère de formule (I) dans laquelle AO désigne l'oxyde d'éthylène, m = 30, n = 0, R désigne la fonction méthacrylate, R' désigne le groupement de formule (II) avec p + q = 9, r = 0 (désigné sous le terme oxo C₁₂OE₃₀).

Ces polymères ont été obtenus par mise en contact dans un milieu réactionnel qui est l'eau, de l'ensemble des monomères précités et ce, en présence de 560 ppm de dodecyl mercaptan. Par rapport à l'essai n° 2, on fait donc ici varier les ratios monomériques.

Les viscosités en l'état des émulsions ont été indiquées dans le tableau 4.

On vérifie qu'on obtient bien des émulsions préneutralisées, stables et manipulables, même à un extrait sec de l'ordre de 25 %.

Les viscosités Brookfield™ à 10 et 100 tours par minute (Brook 10T, Brook 100T en mPa.s), Stormer™ (en KU) et ICI™, de même que le rapport entre la viscosité Brookfield™ à 10 tours / minute et la viscosité ICI™ ont été reportés dans le tableau 5 (même mode opératoire que pour les essais précédents.

On vérifie qu'on épaissit efficacement la peinture.

**Tableau 4**

| **Essai n°** | **IN/HI** | **Bk10 10%** | **Bk10 15 %** | **Bk10 20%** | **Bk10 25 %** |
|---|---|---|---|---|---|
| **2** | **IN** | 20500 | 24000 | 46000 | 120000 |
| **19** | **IN** | 17000 | 21000 | 42500 | 97000 |
| **20** | **IN** | 24000 | 29000 | 53500 | 130000 |
| **21** | **IN** | 18500 | 22000 | 43000 | 100000 |
| **22** | **IN** | 19500 | 23000 | 44000 | 114000 |
| **23** | **IN** | 20000 | 24500 | 47000 | 122000 |
| **24** | **IN** | 25500 | 30000 | 51000 | 127000 |

**Tableau 5**

| **Essai n°** | **19** | **20** | **21** |
|---|---|---|---|
| **Art Antérieur / Invention** | **IN** | **IN** | **IN** |
| ICI | 3,1 | 2,8 | 2,9 |
| Brook.10T | 3320 | 3610 | 3300 |
| Brook.100T | 2280 | 2450 | 2260 |
| Stormer | 110 | 106 | 110 |
| Brook.10T/ICI | 1071 | 1289 | 1138 |
| | | | |

| **Essai n°** | **22** | **23** | **24** |
|---|---|---|---|
| **Art Antérieur / Invention** | **IN** | **IN** | **IN** |
| ICI | 2,8 | 2,8 | 3,1 |
| Brook.10T | 3300 | 3510 | 3700 |
| Brook.100T | 2250 | 2410 | 2660 |
| Stormer | 109 | 108 | 110 |
| Brook.10T/ICI | 1179 | 1254 | 1194 |

## Revendications

1. Emulsion de type HASE, contenant de l'eau et au moins un polymère constitué :
a) d'acide (méth)acrylique,
b) d'au moins un ester de l'acide (méth)acrylique,
c) d'au moins un monomère de formule (I) :
R - (AO)ₘ - (BO)ₙ - R'
où :
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne une fonction insaturée polymérisable, préférentiellement méthacrylate,
- R' étant **caractérisé en ce qu'**il est constitué d'au moins un groupement de formule (II) :
CH₃ - (CH₂)ₚ - CH(CH₂)ᵣCH₃ - (CH₂)_{q} -
où p et q désignent des entiers dont un au moins est non nul, avec 5 < p + q < 13, r est un entier égal à 0.

2. Emulsions selon la revendication 1, **caractérisées en ce que**, pour le monomère de formule (I), on a n = 0, AO désigne l'oxyde d'éthylène, et m est compris entre 20 et 40.

3. Emulsions selon l'une des revendications 1 ou 2, **caractérisées en ce qu'**elles sont partiellement ou totalement, préférentiellement totalement neutralisées à un pH compris entre 6 et 10, préférentiellement entre 6,5 et 8,5, et **en ce qu'**elles présentent de manière concomitante un extrait sec compris entre 15 % et 20 % et une viscosité Brookfield mesurée à 25°C et à 10 tours par minute inférieure à 50 000 mPa.s.

4. Emulsions selon l'une des revendications 1 à 3, **caractérisées en ce que** ledit polymère qu'elle contienne est constitué, exprimé en % en poids de chacun de ses monomères :
a) de 20 % à 50 %, préférentiellement de 35 % à 45 % d'acide (méth)acrylique,
b) de 40 % à 70 %, préférentiellement de 45 % à 55 % d'au moins un ester de l'acide (méth)acrylique,
c) de 2 % à 20 %, préférentiellement de 3 % à 15 % d'au moins un monomère de formule (I).

5. Procédé de fabrication d'une émulsion de type HASE, par mélange entre de l'eau et au moins un polymère obtenu par mise en contact entre :
a) de l'acide (méth)acrylique,
b) au moins un ester de l'acide (méth)acrylique,
c) au moins un monomère ayant la formule (I) selon la revendication 1,
en présence d'au moins un agent de transfert de chaîne.

6. Procédé selon la revendication 5, **caractérisé en ce que**, pour le monomère de formule (I), on a n = 0, AO désigne l'oxyde d'éthylène, et m est compris entre 20 et 40.

7. Procédé selon l'une des revendications 5 ou 6, **caractérisé en ce que** la dose massique d'agent de transfert de chaîne est comprise, par rapport à la masse totale de monomères engagés, entre 500 ppm et 10 000 ppm, préférentiellement entre 1 500 ppm et 6 000 ppm, très préférentiellement entre 2 000 ppm et 5 000 par rapport à la masse totale des monomères engagés.

8. Procédé selon l'une des revendications 5 à 7, **caractérisé en ce que** l'agent de transfert de chaîne est choisi parmi le N-dodécyl mercaptan, le N-décyl mercaptan, l'octyl mercaptan, le 1,8-dimercapto-3,6-dioxaoctane, l'acide thiolactique.

9. Procédé selon l'une des revendications 5 à 8, **caractérisé en ce qu'**il comprend une étape ultérieure de neutralisation totale ou partielle, préférentiellement totale de l'émulsion à un pH compris entre 6 et 10, préférentiellement entre 6,5 et 8,5.

10. Procédé selon l'une des revendications 5 à 9, **caractérisé en ce que** les émulsions présentent un extrait sec compris entre 15 % et 20 % et une viscosité Brookfield mesurée à 25°C et à 10 tours par minute inférieure à 50 000 mPa.s.

11. Procédé selon l'une des revendications 5 à 10, **caractérisé en ce que** ledit polymère contenu dans les émulsions est constitué, exprimé en % en poids de chacun de ses monomères :
a) de 20 % à 50 %, préférentiellement de 35 % à 45 % d'acide (méth)acrylique,
b) de 40 % à 70 %, préférentiellement de 45 % à 55 % d'au moins un ester de l'acide (méth)acrylique,
c) de 2 % à 20 %, préférentiellement de 3 % à 15 % d'au moins un monomère ayant la formule (I) précitée.

12. Procédé d'épaississement d'une formulation aqueuse contenant un latex, par introduction dans ladite formulation d'une émulsion de type HASE selon l'une des revendications 1 à 4 dont le pH est compris entre 6 et 10, préférentiellement entre 6,5 et 8,5, avec ajout éventuel d'un agent de neutralisation dans ladite formulation.

13. Procédé d'épaississement, selon la revendication 12, d'une formulation aqueuse **caractérisé en ce que** ladite formulation est une peinture aqueuse.

## Patentansprüche

1. Emulsion vom Typ HASE die Wasser beinhaltet, sowie mindestens ein Polymer gebildet aus :
a) (Meth)Acrylsäure,
b) mindestens einem (Meth)Acrylsäureester,
c) mindestens einem Monomer der Formel (I) :
R - (AO)ₘ - (BO)ₙ - R'
worin:
- m und n ganze Zahlen kleiner als 150 sind, von denen mindestens eine ungleich null ist,
- A und B für zwei unterschiedliche Alkylgruppen stehen, die 2 bis 4 Kohlenstoffatome besitzen, die Gruppe AO steht vorzugsweise für Ethylenoxid und die Gruppe BO steht vorzugsweise für Propylenoxid,
- R für eine ungesättigte, polymerisierbare Gruppe steht, vorzugsweise für Methacrylat,
- R' **dadurch gekennzeichnet ist, dass** er aus mindestens einer Gruppe der Formel (II) gebildet wird :
CH₃ - (CH₂)ₚ - CH(CH₂)ᵣCH₃ - (CH₂)_{q} -
worin p und q für ganze Zahlen stehen, von denen mindestens eine ungleich null ist, mit 5 < p + q < 13 und r eine ganze Zahl gleich null ist.

2. Emulsionen nach Anspruch 1, **dadurch gekennzeichnet, dass** für das Monomer der Formel (I), n = 0 ist, AO für Ethylenoxid steht, und m im Bereich von 20 bis 40 liegt.

3. Emulsionen nach einem der Ansprüche 1 oder 2, **dadurch gekennzeichnet, dass** sie unvollständig oder vollständig neutralisiert sind, vorzugsweise vollständig, mit einem pH-Wert von 6 bis 10, vorzugsweise von 6,5 bis 8,5 und darin, dass sie einen Trockenmassegehalt von 15 % bis 20 % sowie eine Brookfield-Viskosität, gemessen bei 25°C bei 10 Umdrehungen pro Minute, unter 50.000 mPa.s. besitzen.

4. Emulsion nach einem der Ansprüche 1 bis 3, **dadurch gekennzeichnet, dass** das enthaltene Polymer, augedrückt in Gew.-% eines jeden seiner Monomere :
a) zu 20 Gew.-% bis 50 Gew.-%, vorzugsweise von 35 Gew.-% bis 45 Gew.-% aus (Meth)acrylsäure besteht,
b) zu 40 Gew.-% bis 70 Gew.-%, vorzugsweise zu 45 Gew.-% bis 55 Gew.-% aus mindestens einem (Meth)Acrylsäureester besteht,
c) zu 2 Gew.-% bis 20 Gew.-%, vorzugsweise zu 3 Gew.-% bis 15 Gew.-% aus mindestens einem Monomer der Formel (I) besteht.

5. Herstellungsverfahren einer Emulsion vom Typ HASE durch Vermischen von Wasser und mindestens einem Polymer, der erhalten wird durch das in Kontakt bringen von :
a) (Meth)acrylsäure,
b) mindestens einem (Meth)acrylsäureester,
c) mindestens einem Monomer der Formel (I) nach Anspruch 1,
in Gegenwart von mindestens einem Kettenüberträger.

6. Verfahren nach Anspruch 5, **dadurch gekennzeichnet, dass** für das Monomer der Formel (1) n = 0 ist, AO für Ethylenoxid steht und m im Bereich von 20 bis 40 liegt.

7. Verfahren nach einem der Ansprüche 5 bis 6, **dadurch gekennzeichnet, dass** die Masse des Kettenüberträgers, in bezug auf die Gesamtmasse eingesetzter Monomere von 500 ppm bis 10.000 ppm, vorzugsweise von 1.500 ppm bis 6.000 ppm und speziell vorzugsweise von 2.000 ppm bis 5.000 ppm beträgt.

8. Verfahren nach einem der Ansprüche 5 bis 7, **dadurch gekennzeichnet, dass** der Kettenüberträger aus N-dodecyl Mercaptan, N-decyl Mercaptan, Octylmercaptan, 1,8-Dimercapto-3,6-Dioxaoctan oder Thiomilchsäure ausgewählt ist.

9. Verfahren nach einem der Ansprüche 5 bis 8, **dadurch gekennzeichnet, dass** es einen letzten Schritt enthält, in welchem die Emulsion unvollständig oder vollständig, vorzugsweise vollständig, zu einem pH-Wert von 6 bis 10, vorzugsweise von 6,5 bis 8,5, neutralisiert wird.

10. Verfahren nach einem der Ansprüche 5 bis 9, **dadurch gekennzeichnet, dass** die Emulsion einen Trockenmassegehalt von 15 % bis 20 % und eine Brookfield-Viskosität, gemessen bei 25°C und 10 Umdrehungen pro Minute, unter 50 000 mPa.s. besitzt.

11. Verfahren nach einem der Ansprüche 5 bis 10, dadurch gekennzeichent, dass das genannte Polymer in den Emulsionen, ausgedrückt in Gew.-% eines jeden seiner Monomere :
a) zu 20 Gew.-% bis 50 Gew.-%, vorzugsweise zu 35 Gew.-% bis 45 Gew.-% aus (Meth)acrylsäure besteht,
b) zu 40 Gew.-% bis 70 Gew.-%, vorzugsweise zu 45 Gew.-% bis 55 Gew.-% aus mindestens einem (Meth)Akrylsäureester besteht,
c) zu 2 Gew.-% bis 20 Gew.-%, vorzugsweise von 3 Gew.-% bis 15 Gew.-% aus mindestens einem Monomer der vorgenannten Formel (I) besteht.

12. Verfahren zum Andicken einer wässrigen Formulierung die ein Latex enthält durch Hinzufügen einer Emulsion vom Typ HASE nach einem der Ansprüche 1 bis 4, mit einem pH-Wert von 6 bis 10, vorzugsweise von 6,5 bis 8,5, gegebenenfalls mit Zugabe eines Neutralisationsmittels.

13. Verfahren zum Andicken einer wässrigen Formulierung nach Anspruch 12, **dadurch gekennzeichnet, dass** die genannte Formulierung eine wässrige Farbe ist.

## Claims

1. A HASE emulsion, containing water and at least one polymer made up of:
a) (meth)acrylic acid,
b) at least one ester of (meth)acrylic acid,
c) at least one monomer whose formula is (I):
R - (AO)ₘ - (BO)ₙ - R'
where:
- m and n are whole numbers less than 150, at least one of which is not zero,
- A and B designate alkyl groups that are different from one another, and having 2 to 4 carbon atoms, the AO group preferably designating ethylene oxide and the BO group preferably designating propylene oxide,
- R designates a polymerizable unsaturated function, preferably methacrylate,
- R' being **characterized in that** it is made up of at least one group with the formula (II):
CH₃ - (CH₂)ₚ - CH(CH₂)ᵣCH₃ - (CH₂)_{q} -
where p and q designate whole numbers, at least one of which is not zero, where 5 < p + q < 13, and r is a whole number equal to 0.

2. Emulsions according to claim 1, **characterized in that**, for the monomer with formula (I), n = 0, AO designates ethylene oxide, and m is between 20 and 40.

3. Emulsions according to one of the claims 1 or 2, **characterized in that** they are partially or fully, and preferably fully, neutralized at a pH of between 6 and 10, preferably between 6.5 and 8.5, and **in that** they concomitantly exhibit a solids content of between 15% and 20% and a Brookfield™ viscosity measured at 25°C and at 10 revolutions per minute of less than 50,000 mPa.s.

4. Emulsions according to one of the claims 1 to 3, **characterized in that** said polymer that it contains is made up, expressed as a % by weight of each of its monomers:
a) of 20% to 50%, and preferably 35% to 45%, (meth)acrylic acid,
b) of 40% to 70%, and preferably 45% to 55% of at least one ester of (meth)acrylic acid,
c) of 2% to 20%, preferably 3% to 15% of at least one monomer with the formula (I).

5. A method for manufacturing a HASE emulsion by mixing water and at least one polymer obtained by bringing the following into contact:
a) (meth)acrylic acid,
b) at least one ester of (meth)acrylic acid,
c) at least one monomer with the formula (I) according to claim 1,
in the presence of at least one chain transfer agent.

6. A method according to claim 5, **characterized in that**, for the monomer with formula (I), n = 0, AO designates ethylene oxide, and m is between 20 and 40.

7. A method according to one of the claims 5 or 6, **characterized in that** the dose of chain transfer agents by mass is, compared to the total mass of the monomers involved, between 500 ppm and 10,000 ppm, preferably between 1,500 ppm and 6,000 ppm, and very preferably between 2,000 ppm and 5,000 compared to the total mass of the monomers involved.

8. A method according to one of the claims 5 to 7, **characterized in that** the chain transfer agent is chosen from among N-dodecyl mercaptan, N-decyl mercaptan, octyl mercaptan, 1,8-dimercapto-3,6-dioxaoctane, thiolactic acid.

9. A method according to one of the claims 5 to 8, **characterized in that** it comprises a later step of total or partial neutralization, preferably total, of the emulsion to a pH between 6 and 10, and preferably between 6.5 and 8.5.

10. A method according to one of the claims 5 to 9, **characterized in that** the emulsions exhibit a solids content of between 15% and 20% and a Brookfield viscosity measured at 25°C and at 10 revolutions per minute below 50,000 mPa.s.

11. A method according to one of the claims 5 to 10, **characterized in that** said polymer contained within the emulsions is made up, expressed as a % by weight of each of its monomers:
a) of 20% to 50%, and preferably 35% to 45%, (meth)acrylic acid,
b) of 40% to 70%, and preferably 45% to 55% of at least one ester (meth)acrylic acid,
c) of 2% to 20%, and preferably 3% to 15% of at least one monomer with the aforementioned formula (I).

12. A method for thickening an aqueous formulation containing a latex, by adding into said formulation of a HASE emulsion according to one of the claims 1 to 4 whose pH is between 6 and 10, preferably between 6.5 and 8.5, and potentially adding a neutralization agent into said formulation.

13. A method for thickening, according to claim 12, of an aqueous formulation **characterized in that** said formulation is a water-based paint.
